# EUROPEAN PATENT SPECIFICATION

(11) **EP 2 200 307 B1**
(45) Date of publication and mention of the grant of the patent: **16.09.2015**
(21) Application number: 09178380.3
(22) Date of filing: 08.12.2009
(51) Int. Cl.: H04H 60/14, H04H 60/23, H04N 21/2343, H04N 21/266, H04N 21/6334, H04N 21/647, H04N 21/4623, H04N 7/167, H04N 7/16

(54) **AT-DMB transmitting and receiving system for providing conditional access broadcasting service and method thereof**
AT-DMB-Sende- und Empfangssystem zur Bereitstellung von Rundfunkdiensten mit bedingtem Zugang und Verfahren dafür
Système de réception et de transmission AT-DMB pour fournir un service de diffusion à accès conditionnel et procédé associé

(30) Priority: 11.12.2008 KR 20080126113; 15.06.2009 KR 20090052916
(43) Date of publication of application: 23.06.2010
(73) Proprietor: Electronics and Telecommunications Research Institute, Daejeon 305-350 (KR)
(72) Inventor: BAE, Byungjun, 302-777 Daejeon (KR); YUN, Joungil, 305-308, Daejeon (KR); KIM, Kwang-Yong, 305-751, Daejeon (KR); YANG, Kyu Tae, 305-729, Daejeon (KR); LIM, Jong Soo, 301-831, Daejeon (KR); LEE, Soo In, 302-120, Daejeon (KR)
(74) Representative: Betten & Resch

(56) References cited:
- WO-A1-2008/069600
- US-A1- 2004 196 975
- US-A1- 2005 185 795
- YONGHOON LEE ET AL: "Digital Audio Broadcasting (DAB); Conditional access; ETSI TS 102 367", ETSI STANDARDS, LIS, SOPHIA ANTIPOLIS CEDEX, FRANCE, vol. BC, no. V1.1.1, 1 January 2005 (2005-01-01), XP014027341, ISSN: 0000-0001
- YONGHOON LEE ET AL: "Effective multiplexing method for conditional access system in terrestrial DMB", ETRI JOURNAL: ELECTRONICS AND TELECOMMUNICATION RESEARCH INSTITUTE SOUTH KOREA, vol. 30, no. 6, December 2008 (2008-12), pages 859-861, XP002607616, ISSN: 1225-6463

## Description

### BACKGROUND OF THE INVENTION

### (a) Field of the Invention

The present invention relates to a conditional access apparatus for providing a terrestrial digital multimedia broadcasting service, and in particular, to an advanced terrestrial digital multimedia broadcasting (advanced T-DMB, hereinafter, referred to as 'AT-DMB') transmitting and receiving system for providing a conditional access broadcasting service in an advanced terrestrial digital multimedia broadcasting system, and a method thereof.

### (b) Description of the Related Art

Recently, after terrestrial digital multimedia broadcasting (hereinafter referred to as 'T-DMB') service was commercialized, discussion on charging for a data broadcasting service has been continuously raised for the purpose of the activation of industry.

The charging service can be achieved by introducing a conditional access system.

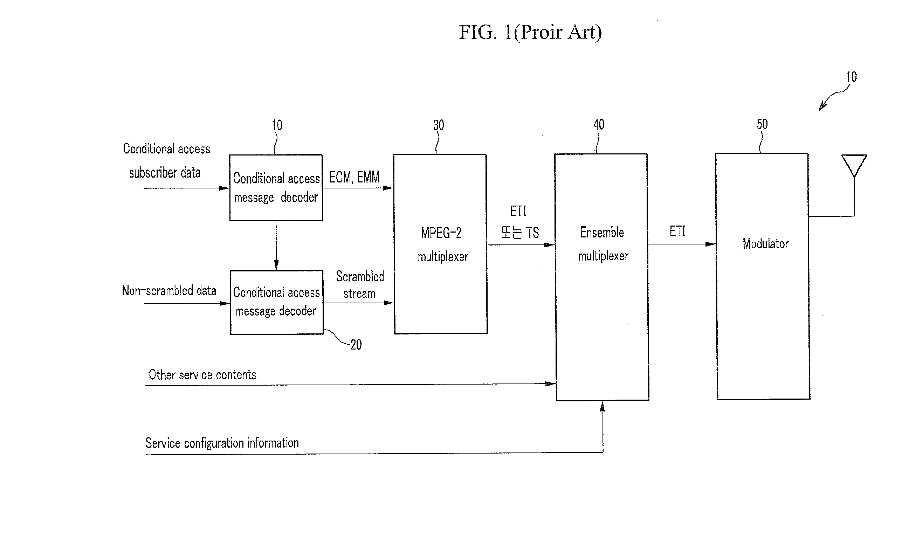

FIG. 1 is a block diagram schematically showing a configuration of a conditional access system in a T-DMB that is currently standardized and used according to the related art.

The conditional access system according to the related art includes a conditional access message encoder 10, a scrambler 20, an MPEG-2 multiplexer 30, an ensemble multiplexer 40, and a modulator 50.

The conditional access message encoder 10 receives conditional access subscriber data from the external and encodes it, and transmits the encoded conditional access data to the data MPEG-2 multiplexer 20.

Herein, the conditional access data includes an entitlement control message (hereinafter referred to as 'ECM') that consists of an encrypted control word and a control parameter and an entitlement management message (hereinafter referred to as 'EMM') that grants watching authority for corresponding programs to a subscriber.

The scrambler 20 receives non-scrambled data and scrambles it using a key value for scrambling received from the conditional access message encoder and then transmits the scrambled streams to the MPEG-2 multiplexer 30.

The MPEG-2 multiplexer 30 receives the conditional access data from the conditional access message encoder 10 and the scrambled streams from the scrambler 20, and multiplexes them to generate one MPEG-2 stream.

The ensemble multiplexer 40 receives the MPEG-2 stream from the MPEG-2 multiplexer 30 and receives a fast information channel (FIC) including service configuration information, service component information, and multiplexing configuration information from the external and contents for other services, and multiplexes them, thereby generating an ensemble transport interface (hereinafter referred to as 'ETI') frame for the T-DMB broadcasting service.

The modulator 50 receives the ETI frame generated from the ensemble multiplexer 40 and provides services.

The AT-DMB is a broadcasting system that adds a new hierarchical modulation method based on the T-DMB and expands the capacity of transmission data twice.

The AT-DMB can more provide broadcasting services than the T-DMB, such that a charging service by using the conditional access system should be considered.

The T-DMB should transmit the conditional accessing receiving data and the existing broadcasting streams.

Therefore, in the T-DMB, as the number of conditional access service subscribers is increased, the amount of conditional access data is increased. As a result, there is a problem in reducing the amount of data for a basic broadcasting service in the transmission amount of the limited broadcasting channel.

The AT-DMB that is different from the T-DMB system according to the related art needs a method that uses a conditional access system for providing a charging service.

The above information disclosed in this Background section is only for enhancement of understanding of the background of the invention and therefore it may contain information that does not form the prior art that is already known in this country to a person of ordinary skill in the art.

Document US 2005185795 provides an encoding and a decoding method for adaptively protecting a scalable-encoded bitstream. The concert disclosed seeks to adaptively protect a scalable-encoded bitstream by selectively encrypting a bitstream for a particular layer or embedding a watermark into the bitstream.

The authors of document US 2004196975 disclose exemplary systems and related methods for fully scalable encryption of scalable multimedia. A scalable bitstream encrypted using the concept described maintains full functionality of scalable features in the encrypted fbnn. The exemplary scalable encryption allows transcoding, rate shaping, and other operations directly on the ciphertext without degradation of scalable compression efficiency and error resiliency.

International application WO2008069600 provides an apparatus and method for a digital multimedia broadcasting (DMB) service. The DMB transmitter includes a base layer transmission processor for encoding base layer stream, an enhancement layer transmission processor for encoding enhancement layer stream, and a hierarchical transmitter for transmitting the base layer stream and the enhancement layer stream by allocating a predetermined bit value through encoding the base layer stream outputted from the base layer transmission processor and the enhancement layer stream outputted from the enhancement layer transmission processor based axe gray cording ant performing hierarchical symbol mapping.

YONGIHOON LEE ET AL: "Effective multiplexing method for conditional access system in terrestrial DMB" Database accession no. 10636697; THE INSTITUTION OF ELECTRICAL ENGINEERS, STEVENAGE, GB; December 2008 (2008-12), & ETRI JOURNAL ELECTRONICS AND TELECOMMUNICATION RESEARCH INSTITUTE SOUTH KOREA, vol. 30, no. 6, December 2008, pages 859-861, ISSN: 1225-6463, the authors propose a conditional access system (CAS) suitably for use in terrestrial digital multimedia broadcasting (T-DMB), based on an effective multiplexing method to provide encrypted T-DMB services. Specifically, the proposed multiplexing method for a CAS is designed to reduce the additional bit rate while assuring easy access to the designated encrypted service. Finally, the performance of the implemented CAS is confirmed through implementation and a broadcasting experiment under various service environments.

ETSI TS 102 367 V1.1.1 (2005-01), "Digital Audio Broadcasting (DAB), Conditional Access", specifies conditional access in DAB with the ability to deliver encrypted services, both audio and data, both stream mode and packet mode within a standardized framework. The Conditional Access system used in the DAB System includes three main functions: scrambling/descrambling, entitlement checking and entitlement management. The scrambling/descrambling function aims to make the service incomprehensible to unauthorized users. Descrambling can be achieved by any receiver having an appropriate descrambler and holding a secret control word. Scrambling can be applied to service components, either using a common control word or using separate control words for each component.

### SUMMARY OF THE INVENTION

In order to solve the above problems, the present invention has been made in an effort to provide an AT-DMB transmitting and receiving system for providing a conditional access broadcasting service and a method thereof.

In order to achieve the above objects, an exemplary embodiment of the present invention provides an AT-DMB transmitting system, including; a conditional access message encoder that receives and encodes conditional access subscriber data and converts them into conditional access data; a base layer scrambler that generate a scrambled base layer stream by using a key value for scrambling received from the conditional access message encoder; an enhancement layer scrambler that generates a scrambled enhancement layer stream using a key value for scrambling received from the conditional access message encoder; and an ensemble multiplexer that receives a fast information channel representing service configuration information, the scrambled base layer stream, and the scrambled enhancement layer stream, and generates a base layer ensemble transmission interface frame and an enhancement layer ensemble transmission interface frame for transmitting the conditional access data, wherein the base layer ensemble transmission frame transmits, through the fast information channel of the base layer, conditional access related information representing that the conditional access data is allocated to a sub-channel of the enhancement layer.

Another embodiment of the present invention provides an AT-DMB transmitting method, including: allowing the conditional access message encoder to receive and encode conditional access subscriber data and convert them into conditional access data;
allowing the scrambler to generate a scrambled base layer stream and a scrambled enhancement layer stream by using a key value for scrambling received from the conditional access message encoder; and
allowing the ensemble multiplexer to receive a fast information channel representing service configuration information, the scrambled base layer stream, the scrambled enhancement layer stream, and the conditional access data, to transmit conditional access related information representing that the conditional access data is allocated to a dedicated sub-channel of the enhancement layer through the fast information channel of the base layer, and to transmit the conditional access data through the dedicated sub-channel of the enhancement layer.

Yet another embodiment of the present invention provides an AT-DMB receiving system, including: a demodulator that hierarchically demodulates a terrestrial digital multimedia broadcasting signal received from a transmitting system providing a conditional access broadcasting service and outputs it as a base layer service signal and an enhancement layer service signal;
an ensemble demultiplexer that receives the base layer service signal or the enhancement layer service signal from the demodulator and demultiplexes it to output a fast information channel of the base layer or a fast information channel of the enhancement layer;
a base layer fast information channel analyzer that analyzes the fast information channel of the base layer to extract conditional access related information, finds a specific sub-channel having the conditional access data in the enhancement layer based on the extracted conditional access related information, and finds a scrambled base layer stream and a scrambled enhancement layer stream; and
a conditional access message decoder that decodes the conditional access data to find a key value related to descrambling and performs a control to descramble the scrambled base layer stream and the scrambled enhancement layer stream using the key value.

### BRIEF DESCRIPTION OF THE DRAWINGS

FIG. 1 is a block diagram schematically showing a configuration of a conditional access system in a T-DMB according to the related art, which is currently being standardized and applied;
FIG. 2 is a block diagram schematically showing a configuration of an AT-DMB transmitting system for providing a conditional access service according to an exemplary embodiment of the present invention;
FIG. 3 is a drawing showing a structure of a base layer ETI frame and an enhancement layer ETI frame in an AT-DMB transmitting system according to an exemplary embodiment of the present invention; and
FIG. 4 is a block diagram schematically showing a configuration of an AT-DMB receiving system for providing a conditional access service according to an exemplary embodiment of the present invention.

### DETAILED DESCRIPTION OF THE EMBODIMENTS

In the following detailed description, only certain exemplary embodiments of the present invention have been shown and described, simply by way of illustration. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification.

In the specification, unless explicitly described to the contrary, the word "comprise" and variations such as "comprises" or "comprising" will be understood to imply the inclusion of stated elements but not the exclusion of any other elements.

An existing T-DMB service is referred to as a base layer service in an AT-DMB and a hierarchical modulated service is referred to as an enhancement layer service.

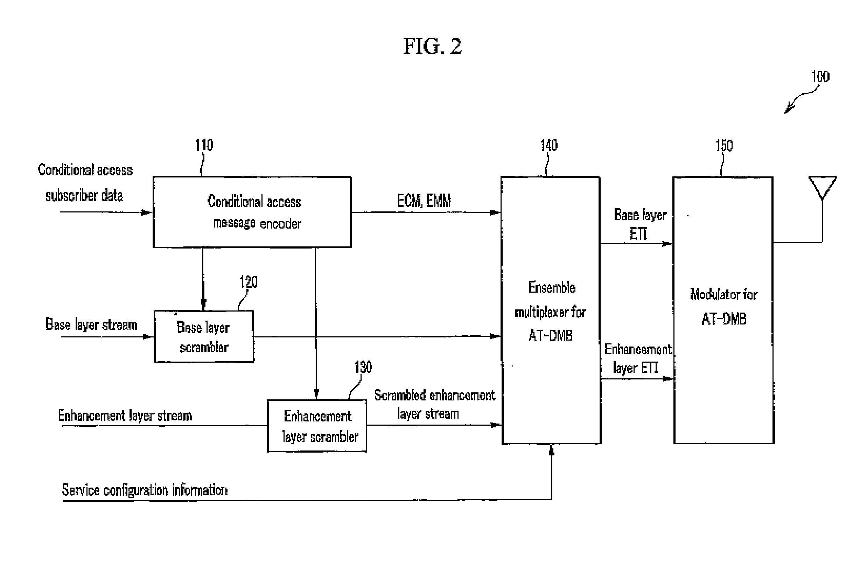

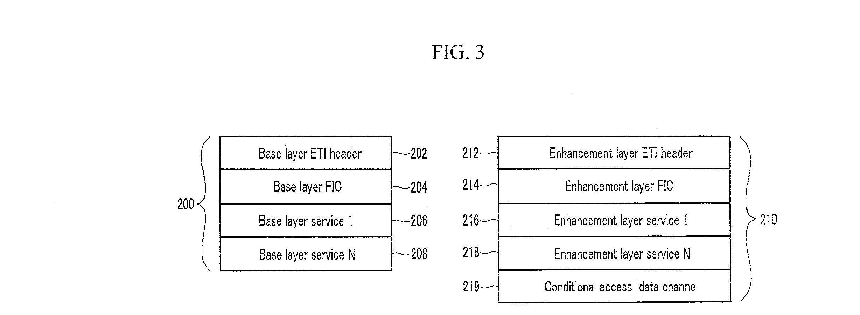

FIG. 2 is a block diagram schematically showing a configuration of an AT-DMB transmitting system for providing a conditional access service according to an exemplary embodiment of the present invention, and FIG. 3 is a drawing showing a structure of a base layer ETI frame and an enhancement layer ETI frame in an AT-DMB transmitting system according to an exemplary embodiment of the present invention.

An AT-DMB transmitting system 100 according to an exemplary embodiment of the present invention includes a conditional access message encoder 110, a base layer scrambler 120, an enhancement layer scrambler 130, an ensemble multiplexer 140 for an AT-DMB, and a modulator 150 for an AT-DMB.

The conditional area receiving message encoder 110 receives conditional access subscriber data from the external and encodes them and generates a key value for scrambling therethrough, and sends it to the base layer scrambler 120 and the enhancement layer scrambler 130.

The conditional access message encoder 110 receives conditional access subscriber data from the external, encodes them, convert them into the encoded conditional access data (ECM and EMM), and then transmits them to the ensemble multiplexer 140. At this time, whether the scramble is performed on services in the base layer and the enhancement layer can be determined according to an AT-DMB operator.

The base layer scrambler 120 generates and transmits a scrambled base layer stream using a base layer stream and a key value for scrambling received from the conditional access message encoder 110.

The enhancement layer scrambler 130 generates and transmits a scrambled enhancement layer stream using an enhancement layer stream and a key value for scrambling received from the conditional access message encoder 110.

The ensemble multiplexer 140 for an AT-DMB receives a fast information channel (hereinafter referred to as 'FIC') representing service configuration information from the external, ECM and EMM from the conditional access message encoder 110, the scrambled or non-scrambled base layer stream from the base layer scrambler 120, and the scrambled or non-scrambled enhancement layer stream from the enhancement layer scrambler 130.

The ensemble multiplexer 140 for an AT-DMB multiplexes the input FIC, ECM, EMM, scrambled or non-scrambled base layer stream, and scrambled or non-scrambled enhancement layer stream, to configure a base layer ETI frame 200 and an enhancement layer ETI frame 210.

As shown in FIG. 3, the base layer ETI frame 200 includes a base layer ETI header 202, a base layer FIC 204, a base layer service 1 206, and a base layer service N 208, and the enhancement layer ETI frame 210 includes an enhancement layer ETI header 212, an enhancement layer FIC 214, an enhancement layer service 1 216, an enhancement layer service N 218, and a conditional access data channel 219.

In other words, the base layer ETI frame 200 is configured to include the base layer FIC 204 having conditional access related information, the scrambled base layer stream, and the non-scrambled base layer stream, and the enhancement layer ETI frame 210 is configured to include the scrambled enhancement layer stream and the non-scrambled enhancement layer stream. Herein, the conditional access related information includes information representing that the conditional access data is allocated to a sub-channel of the enhancement layer and information to descramble the scrambled streams

The ensemble multiplexer 140 for an AT-DMB does not transmit all the input ECM and EMM together with the scrambled stream like the methods according to the related art, but transmits them by allocating a separate sub-channel of the added enhancement layer.

Further, the ensemble multiplexer 140 for an AT-DMB may be configured so that it does not transmit the conditional access related information through the base layer FIC 204, but transmits it through the enhancement layer FIC 214.

The ensemble multiplexer 140 for an AT-DMB does not transmit the ECM and EMM through the base layer but transmits it through the added enhancement layer, thereby preventing a loss of an effective amount of transmission of the base layer.

The ensemble multiplexer 140 for an AT-DMB adds the ECM having a small amount of data to each scrambling channel and transmits it, and can transmit the EMM having the increased amount of data according to the subscriber through a separate sub-channel of the enhancement layer.

The ensemble multiplexer 140 for an AT-DMB configures a base layer ETI frame like the T-DMB according to the related art and sends it to the AD-DMB modulator, and configures an enhancement layer ETI frame to which the conditional access data dedicated service channel like ECM and EMM is allocated and sends it to the AT-DMB modulator.

The AT-DMB modulator hierarchically modulates the base layer ETI frame 200 and the enhancement layer ETI frame 210 to generate and transmit the AT-DMB signals.

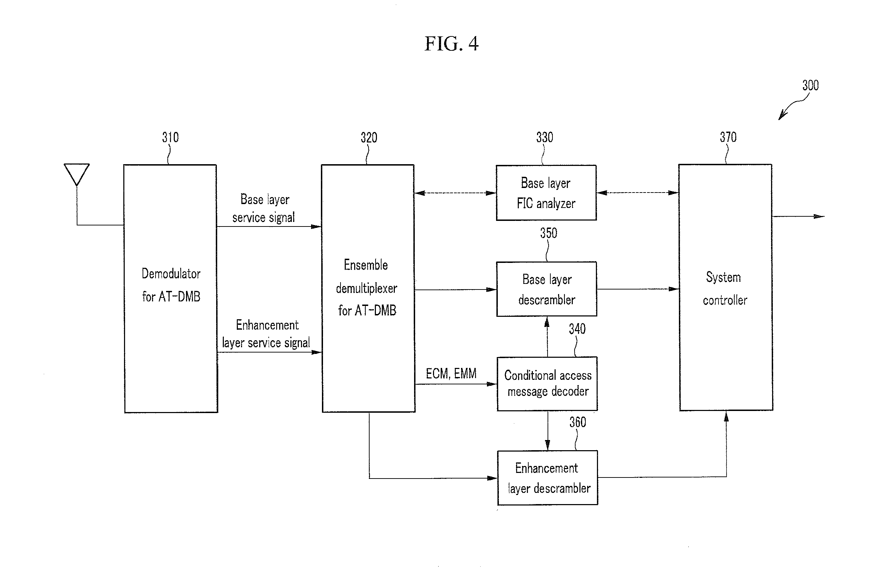

FIG. 4 is a block diagram schematically showing a configuration of an AT-DMB receiving system for providing a conditional access service according to an exemplary embodiment of the present invention.

The AT-DMB receiving system 300 according to an exemplary embodiment of the present invention includes a demodulator 310 for an AT-DMB, an ensemble demultiplexer 320 for an AT-DMB, a base layer FIC analyzer 330, a conditional access message decoder 340, a base layer descrambler 350, an enhancement layer descrambler 360, and a system controller 370.

The demodulator 310 for an AT-DMB hierarchically demodulates the AT-DMB signal received from the AT-DMB transmitting system 100 and outputs it as a base layer service signal and an enhancement layer service signal that are multiplexed.

The ensemble demultiplexer 320 for an AT-DMB demultiplexes the multiplexed base layer service signal and enhancement layer service signal from the demodulator 310 for an AT-DMB to respectively output a stream, data, and contents information. Further, the ensemble demultiplexer 320 for an AT-DMB demultiplexes the base layer service signal to output the FIC of the base layer.

The base layer FIC analyzer 330 analyzes the FIC of the base layer to extract the conditional access related information and finds the sub-channel having the conditional access data such as ECM, EMM, etc., in the enhancement layer based on the extracted conditional access related information.

The base layer FIC analyzer 330 analyzes the FIC of the base layer to find the scrambled base layer stream and the scrambled enhancement layer stream.

The AT-DMB receiving system 300 finds the sub-channel having the conditional access data, the scrambled base layer stream, and the scrambled enhancement layer stream using the enhancement layer FIC analyzer (not shown) when the conditional access related information from the AT-DMB transmitting system 100 is not transmitted through the base layer FIC 204, but the enhancement layer FIC 214. Herein, the enhancement layer FIC analyzer (not shown) performs a function similar to the foregoing base layer FIC analyzer 330.

The conditional access message decoder 340 receives the extracted conditional access data from the base layer FIC analyzer 330, decodes them, finds the key values related to the descramble, and then sends them to the base layer descrambler 350 and the enhancement layer descrambler 360.

The base layer descrambler 350 descrambles the scrambled base layer stream using the demultiplexed base layer service signal and the key value related to the descramble.

The enhancement layer descrambler 360 descrambles the scrambled enhancement layer stream using the demultiplexed enhancement layer service signal and the key value related to the descramble.

The system controller 370 controls each component of the AT-DMB receiving system 300 to perform a series of processes on the foregoing conditional access broadcasting service, and finally receives and transmits the descrambled streams.

According to the embodiments of the present invention, the AT-DMB transmitting and receiving system for a charging service while maintaining compatibility with the T-DMB system according to the related art is provided.

In addition, when the number of subscribers is increased, an effective amount of transmission of the existing T-DMB is reduced due to the increase of conditional access data is solved by using the increased usable amount of transmission of the AT-DMB.

The above-mentioned exemplary embodiments of the present invention are not embodied only by a apparatus and method. Alternatively, the above-mentioned exemplary embodiments may be embodied by a program performing functions that correspond to the configuration of the exemplary embodiments of the present invention, or a recording medium on which the program is recorded. These embodiments can be easily devised from the description of the above-mentioned exemplary embodiments by those skilled in the art to which the present invention pertains.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. An AT-DMB transmitting system (100), comprising:
a conditional access message encoder (110) that receives and encodes conditional access subscriber data and converts them into conditional access data;
a base layer scrambler (120) that generates a scrambled base layer stream by using a key value received from the conditional access message encoder (110) for scrambling a base layer stream;
an enhancement layer scrambler (130) that generates a scrambled enhancement layer stream using a key value received from the conditional access message encoder (110) for scrambling an enhancement layer stream; and
an ensemble multiplexer (140) that receives a fast information channel representing service configuration information, the scrambled base layer stream, and the scrambled enhancement layer stream, and generates a base layer ensemble transmission interface frame (200) and an enhancement layer ensemble transmission interface frame (210) for transmitting the conditional access data,
wherein the ensemble multiplexer (140) transmits, through the fast information channel of the base layer, conditional access related information, representing that the conditional access data is allocated to a sub-channel of the enhancement layer.

2. The AT-DMB transmitting system (100) of claim 1, wherein the ensemble multiplexer (140) transmits the conditional access data through an added enhancement layer rather than transmitting them with the scrambled streams.

3. The AT-DMB transmitting system (100) of claim 1, wherein the ensemble multiplexer (140) configures the enhancement layer ensemble transmission interface frame (210) or the base layer ensemble transmission interface frame (200) to include the conditional access related information representing that the conditional access data is allocated to the sub-channel of the enhancement layer in a fast information channel of the enhancement layer.

4. The AT-DMB transmitting system (100) of claim 1, wherein the ensemble multiplexer (140) adds an entitlement control message (ECM) among the conditional access data to each scrambling channel, and transmits an entitlement management message with an increased amount of data according to subscribers through a separate sub-channel of the enhancement layer.

5. An AT-DMB transmitting method comprising:
receiving and encoding conditional access subscriber data and converting them into conditional access data;
generating a scrambled base layer stream by using a received key value for scrambling a base layer stream;
generating a scrambled enhancement layer stream using a received key value for scrambling an enhancement layer stream;
receiving a fast information channel representing service configuration information, the scrambled base layer stream, and the scrambled enhancement layer stream;
generating a base layer ensemble transmission interface frame (200) and an enhancement layer ensemble transmission interface frame (210) for transmitting the conditional access data;
transmitting, through the fast information channel of the base layer, conditional access related information, representing that the conditional access data is allocated to a sub-channel of the enhancement layer.

6. An AT-DMB receiving system (300), comprising:
a demodulator (310) that hierarchically demodulates a terrestrial digital multimedia broadcasting signal received from a transmitting system providing a conditional access broadcasting service and outputs it as a base layer service signal and an enhancement layer service signal;
an ensemble demultiplexer (320) that receives the base layer service signal and the enhancement layer service signal from the demodulator and demultiplexes it to output a fast information channel of the base layer;
a base layer fast information channel analyzer (330) that analyzes the fast information channel of the base layer to extract conditional access related information, finds a specific sub-channel having the conditional access data in the enhancement layer based on the extracted conditional access related information, and finds a scrambled base layer stream and a scrambled enhancement layer stream;
a conditional access message decoder (340) that receives the conditional access data from the base layer fast information channel analyzer (330), decodes the conditional access data to find a key value related to descrambling and performs a control to descramble the scrambled base layer stream and the scrambled enhancement layer stream using the key value;
a base layer descrambler (350) that receives the key value related to the descrambling from the conditional access message decoder (340) and descrambles the scrambled base layer stream using the key value;
an enhancement layer descrambler (360) that receives the key value related to the descrambling from the conditional access message decoder (340) and descrambles the scrambled enhancement layer stream using the key value; and
a system controller (370) that controls the base layer fast information channel analyzer (330), the demodulator (310), and the ensemble demultiplexer (320) to provide the terrestrial digital multimedia broadcasting service, receives the descrambled base layer stream and the descrambled enhancement layer stream, and transmits them.

7. The AT-DMB receiving system (300) of claim 6, further comprising an enhancement layer fast information channel analyzer that analyzes a fast information channel of the enhancement layer to extract the conditional access related information, finds the specific sub-channel having the conditional access data in the enhancement layer based on the extracted conditional access related information, and finds the scrambled base layer streams and the scrambled enhancement layer streams.

8. An AT-DMB receiving method:
hierarchically demodulating a terrestrial digital multimedia broadcasting signal received from a transmitting system providing a conditional access broadcasting service and outputting it as a base layer service signal and an enhancement layer service signal;
receiving the base layer service signal and the enhancement layer service signal and demultiplexing it to output a fast information channel of the base layer;
analyzing the fast information channel of the base layer to extract conditional access related information, finding a specific sub-channel having the conditional access data in the enhancement layer based on the extracted conditional access related information, and finding a scrambled base layer stream and a scrambled enhancement layer stream;
receiving the conditional access data, decoding the conditional access data to find a key value related to descrambling, and performing a control to descramble the scrambled base layer stream and the scrambled enhancement layer stream using the key value;
receiving the key value related to the descrambling and descrambling the scrambled base layer stream using the key value;
receiving the key value related to the descrambling and descrambles the scrambled enhancement layer stream using the key value;
controlling the analyzing, demodulating and the demultiplexing, providing the terrestrial digital multimedia broadcasting service, receiving the descrambled base layer stream and the descrambled enhancement layer stream, and transmitting them.

## Patentansprüche

1. AT-DMB-Übertragungssystem (100), umfassend:
einen Codierer für Nachrichten für bedingten Zugang (110), welcher Teilnehmerdaten für bedingten Zugang empfängt und codiert und diese in Daten für bedingten Zugang konvertiert;
einen Basisschicht (Base Layer) -Verwürfler (120), welcher einen verwürfelten Basisschicht-Strom unter Verwendung eines von dem Codierer für Nachrichten für bedingten Zugang (110) zum Verwürfeln eines Basisschicht-Stroms empfangenen Schlüsselwertes erzeugt;
einen Erweiterungsschicht (Enhancement Layer) -Verwürfler (130), welcher einen verwürfelten Erweiterungsschicht-Strom unter Verwendung eines von dem Codierer für Nachrichten für bedingten Zugang (110) zum Verwürfeln eines Erweiterungsschicht-Stromes empfangenen Schlüsselwertes erzeugt; und
einen Ensemble-Multiplexer (140), welcher einen schnellen Informationskanal (Fast Information Channel) empfängt, der eine Dienstkonfigurationsinformation, den verwürfelten Basisschicht-Strom und den verwürfelten Erweiterungsschicht-Strom angibt, und einen Basisschicht-Ensemble-Übertragungsschnittstellenrahmen (200) und einen Erweiterungsschicht-Ensemble-Übertragungsschnittstellenrahmen (210) zum Übertragen der Daten für bedingten Zugang erzeugt,
wobei der Ensemble-Multiplexer (140) über den schnellen Informationskanal der Basisschicht Information betreffend bedingten Zugang überträgt, welche angibt, dass die Daten für bedingten Zugang einem Unterkanal der Erweiterungsschicht zugewiesen sind.

2. AT-DMB-Übertragungssystem (100) nach Anspruch 1, wobei der Ensemble-Multiplexer (140) die Daten für bedingten Zugang über eine hinzugefügte Erweiterungsschicht überträgt, anstatt sie mit den verwürfelten Strömen zu übertragen.

3. AT-DMB-Übertragungssystem (100) nach Anspruch 1, wobei der Ensemble-Multiplexer (140) den Erweiterungsschicht-Ensemble-Übertragungsschnittstellenrahmen (210) oder den Basisschicht-Ensemble-Übertragungsschnittstellenrahmen (200) derart einrichtet, dass er die Information betreffend bedingten Zugang, die angibt, dass die Daten für bedingten Zugang dem Unterkanal der Erweiterungsschicht zugewiesen ist, in einem schnellen Informationskanal der Erweiterungsschicht enthält.

4. AT-DMB-Übertragungssystem (100) nach Anspruch 1, wobei der Ensemble-Multiplexer (140) eine Berechtigungssteuernachricht (Entitlement Control Message, ECM) unter den Daten für bedingten Zugang zu jedem Verwürfelungskanal hinzufügt und eine Berechtigungsverwaltungsnachricht (Entitlement Management Message) mit einer erhöhten Datenmenge in Übereinstimmung mit Teilnehmern über einen separaten Unterkanal der Erweiterungsschicht überträgt.

5. AT-DMB-Übertragungsverfahren, umfassend:
Empfangen und Codieren von Teilnehmerdaten für bedingten Zugang und Konvertieren dieser in Daten für bedingten Zugang;
Erzeugen eines verwürfelten Basisschicht (Base Layer) -Stroms unter Verwendung eines empfangenen Schlüsselwerts zum Verwürfeln eines Basisschicht-Stroms;
Erzeugen eines verwürfelten Erweiterungsschicht (Enhancement Layer) -Stromes unter Verwendung eines empfangenen Schlüsselwerts zum Verwürfeln eines Erweiterungsschicht-Stroms;
Empfangen eines schnellen Informationskanals (Fast Information Channel), der Dienstkonfigurationsinformation, den verwürfelten Basisschicht-Strom und den verwürfelten Erweiterungsschicht-Strom angibt;
Erzeugen eines Basisschicht-Ensemble-Übertragungsschnittstellenrahmens (200) und eines Erweiterungsschicht-Ensemble-Übertragungsschnittstellenrahmens (210) zum Übertragen der Daten für bedingten Zugang;
Übertragen von Information betreffend bedingten Zugang, welche angibt, dass die Daten für bedingten Zugang einem Unterkanal der Erweiterungsschicht zugewiesen sind, über den schnellen Informationskanal der Basisschicht.

6. AT-DMB-Empfangssystem (300), umfassend:
einen Demodulator (310), welcher ein von einem Übertragungssystem, das einen Rundsendungsdienst für bedingten Zugang bereitstellt, empfangenes terrestrisches Digital-Multimedia-Rundsendungssignal hierarchisch demoduliert und es als ein Basisschicht (Base Layer) -Dienstsignal und ein Erweiterungsschicht (Enhancement Layer) -Dienstsignal ausgibt;
einen Ensemble-Demultiplexer (320), welcher das Basisschicht-Dienstsignal und das Erweiterungsschicht-Dienstsignal von dem Demodulator empfängt und es derart demultiplext, dass ein schneller Informationskanal (Fast Information Channel) der Basisschicht ausgegeben wird;
einen Analysator für schnellen Informationskanal (Fast Information Channel) der Basisschicht (330), welcher den schnellen Informationskanal der Basisschicht derart analysiert, dass Information betreffend bedingten Zugang extrahiert wird, einen bestimmten Unterkanal, welcher die Daten für bedingten Zugang in der Erweiterungsschicht aufweist, basierend auf der extrahierten Information betreffend bedingten Zugang auffindet und einen verwürfelten Basisschicht-Strom und einen verwürfelten Erweiterungsschicht-Strom auffindet;
einen Decodierer für Nachrichten für bedingten Zugang (340), welcher die Daten für bedingten Zugang von dem Analysator für schnellen Informationskanal der Basisschicht (330) empfängt, die Daten für bedingten Zugang derart decodiert, dass ein Schlüsselwert aufgefunden wird, der Entwürfeln betrifft, und eine Steuerung derart durchführt, dass der verwürfelte Basisschicht-Strom und der verwürfelte Erweiterungsschicht-Strom unter Verwendung des Schlüsselwertes entwürfelt wird;
einen Basisschicht-Entwürfler (350), welcher den Schlüsselwert, der Entwürfeln betrifft, von dem Decodierer für Nachrichten für bedingten Zugang (340) empfängt und den verwürfelten Basisschicht-Strom unter Verwendung des Schlüsselwerts entwürfelt;
einen Erweiterungsschicht-Entwürfler (360), welcher den Schlüsselwert, der Entwürfein betrifft, von dem Decodierer für Nachrichten für bedingten Zugang (340) empfängt und den verwürfelten Erweiterungsschicht-Strom unter Verwendung des Schlüsselwerts entwürfelt; und
eine Systemsteuereinrichtung (370), welche den Analysator für schnellen Informationskanal der Basisschicht (330), den Demodulator (310) und den Ensemble-Demultiplexer (320) derart steuert, dass der terrestrische Digital-Multimedia-Rundsendungsdienst bereitgestellt wird, den entwürfelten Basisschicht-Strom und den entwürfelten Erweiterungsschicht-Strom empfängt und sie überträgt.

7. AT-DMB-Empfangssystem (300) nach Anspruch 6, ferner umfassend einen Analysator für schnellen Informationskanal der Erweiterungsschicht, welcher einen schnellen Informationskanal der Erweiterungsschicht derart analysiert, dass die Information betreffend bedingten Zugang extrahiert wird, den bestimmten Unterkanal, welcher die Daten für bedingten Zugang aufweist, in der Erweiterungsschicht basierend auf der extrahierten Information betreffend bedingten Zugang auffindet und die verwürfelten Basisschicht-Ströme und die verwürfelten Erweiterungsschicht-Ströme auffindet.

8. AT-DMB-Empfangsverfahren:
hierarchisches Demodulieren eines von einem Übertragungssystem, welches einen Rundsendungsdienst für bedingten Zugang bereitstellt, empfangenen terrestrisches Digital-Multimedia-Rundsendungssignals und Ausgeben als ein Basisschicht (Base Layer) -Dienstsignal und ein Erweiterungsschicht (Enhancement Layer) -Dienstsignal;
Empfangen des Basisschicht-Dienstsignals und des Erweiterungsschicht-Dienstsignals und Demultiplexen derart, dass ein schneller Informationskanal (Fast Information Channel) der Basisschicht ausgegeben wird;
Analysieren des schneller Informationskanals der Basisschicht derart, dass Information betreffend bedingten Zugang extrahiert wird, Auffinden eines bestimmten Unterkanals, welcher die Daten für bedingten Zugang aufweist, in der Erweiterungsschicht basierend auf der extrahierten Information betreffend bedingten Zugang und Auffinden eines verwürfelten Basisschicht-Stroms und eines verwürfelten Erweiterungsschicht-Stroms;
Empfangen der Daten für bedingten Zugang, Decodieren der Daten für bedingten Zugang derart, dass ein Schlüsselwert, der Entwürfeln betrifft, aufgefunden wird, und Durchführen einer Steuerung derart, dass der verwürfelte Basisschicht-Strom und der verwürfelte Erweiterungsschicht-Strom unter Verwendung des Schlüsselwerts entwürfelt wird;
Empfangen des Schlüsselwerts, der Entwürfeln betrifft, und Entwürfeln des verwürfelten Basisschicht-Stroms unter Verwendung des Schlüsselwerts;
Empfangen des Schlüsselwerts, der Entwürfeln betrifft, und Entwürfeln des verwürfelten Erweiterungsschicht-Stroms unter Verwendung des Schlüsselwerts; und
Steuern des Analysierens, Demodulierens und des Demultiplexens, Bereitstellen des terrestrischen Digital-Multimedia-Rundsendungsdienstes, Empfangen des entwürfelten Basisschicht-Stroms und des entwürfelten Erweiterungsschicht-Stroms und Übertragen dieser.

## Revendications

1. Système de transmission AT-DMB (100), comprenant :
un encodeur de message d'accès conditionnel (110) qui reçoit et encode des données d'abonné d'accès conditionnel et les convertit en données d'accès conditionnel ;
un embrouilleur de couche de base (120) qui génère un flux de couche de base embrouillé en utilisant une valeur de clé reçue en provenance de l'encodeur de message d'accès conditionnel (110) pour embrouiller un flux de couche de base ;
un embrouilleur de couche d'amélioration (130) qui génère un flux de couche d'amélioration embrouillé en utilisant une valeur de clé reçue en provenance de l'encodeur de message d'accès conditionnel (110) pour embrouiller un flux de couche d'amélioration ; et
un multiplexeur d'ensemble (140) qui reçoit un canal d'information rapide représentant des informations de configuration de service, le flux de couche de base embrouillé, et le flux de couche d'amélioration embrouillé, et génère une trame d'interface de transmission d'ensemble de couche de base (200) et une trame d'interface de transmission d'ensemble de couche d'amélioration (210) pour transmettre les données d'accès conditionnel,
dans lequel le multiplexeur d'ensemble (140) transmet, par l'intermédiaire du canal d'information rapide de la couche de base, des informations liées à l'accès conditionnel, représentant que les données d'accès conditionnel sont allouées à un sous-canal de la couche d'amélioration.

2. Système de transmission AT-DMB (100) selon la revendication 1, dans lequel le multiplexeur d'ensemble (140) transmet les données d'accès conditionnel par l'intermédiaire d'une couche d'amélioration ajoutée plutôt que de les transmettre avec les flux embrouillés.

3. Système de transmission AT-DMB (100) selon la revendication 1, dans lequel le multiplexeur d'ensemble (140) configure la trame d'interface de transmission d'ensemble de couche d'amélioration (210) ou la trame d'interface de transmission d'ensemble de couche de base (200) pour inclure les informations liées à l'accès conditionnel représentant que les données d'accès conditionnel sont allouées au sous-canal de la couche d'amélioration dans un canal d'information rapide de la couche d'amélioration.

4. Système de transmission AT-DMB (100) selon la revendication 1, dans lequel le multiplexeur d'ensemble (140) ajoute un message de commande d'habilitation (ECM) parmi les données d'accès conditionnel à chaque canal d'embrouillage, et transmet un message de gestion d'habilitation avec une quantité de données accrue selon des abonnés par l'intermédiaire d'un sous-canal séparé de la couche d'amélioration.

5. Procédé de transmission AT-DMB comprenant :
la réception et l'encodage de données d'abonné d'accès conditionnel et leur conversion en données d'accès conditionnel ;
la génération d'un flux de couche de base embrouillé en utilisant une valeur de clé reçue pour embrouiller un flux de couche de base ;
la génération d'un flux de couche d'amélioration embrouillé en utilisant une valeur de clé reçue pour embrouiller un flux de couche d'amélioration ;
la réception d'un canal d'information rapide représentant des informations de configuration de service, le flux de couche de base embrouillé, et le flux de couche d'amélioration embrouillé ;
la génération d'une trame d'interface de transmission d'ensemble de couche de base (200) et d'une trame d'interface de transmission d'ensemble de couche d'amélioration (210) pour transmettre les données d'accès conditionnel,
la transmission, par l'intermédiaire du canal d'information rapide de la couche de base, d'informations liées à l'accès conditionnel, représentant que les données d'accès conditionnel sont allouées à un sous-canal de la couche d'amélioration.

6. Système de réception AT-DMB (300), comprenant :
un démodulateur (310) qui démodule hiérarchiquement un signal de diffusion multimédia numérique terrestre reçu en provenance d'un système de transmission fournissant un service de diffusion d'accès conditionnel et le sort comme un signal de service de couche de base et un signal de service de couche d'amélioration ;
un démultiplexeur d'ensemble (320) qui reçoit le signal de service de couche de base et le signal de service de couche d'amélioration en provenance du démodulateur et les démultiplexe pour sortir un canal d'information rapide de la couche de base ;
un analyseur de canal d'information rapide de couche de base (330) qui analyse le canal d'information rapide de la couche de base pour extraire des informations liées à l'accès conditionnel, trouve un sous-canal spécifique ayant les données d'accès conditionnel dans la couche d'amélioration sur la base des informations liées à l'accès conditionnel extraites, et trouve un flux de couche de base embrouillé et un flux de couche d'amélioration embrouillé ;
un décodeur de message d'accès conditionnel (340) qui reçoit les données d'accès conditionnel en provenance de l'analyseur de canal d'information rapide de couche de base (330), décode les données d'accès conditionnel pour trouver une valeur de clé liée au désembrouillage et exécute une commande pour désembrouiller le flux de couche de base embrouillé et le flux de couche d'amélioration embrouillé en utilisant la valeur de clé ;
un désembrouilleur de couche de base (350) qui reçoit la valeur de clé liée au désembrouillage en provenance du décodeur de message d'accès conditionnel (340) et désembrouille le flux de couche de base embrouillé en utilisant la valeur de clé ;
un désembrouilleur de couche d'amélioration (360) qui reçoit la valeur de clé liée au désembrouillage en provenance du décodeur de message d'accès conditionnel (340) et désembrouille le flux de couche d'amélioration embrouillé en utilisant la valeur de clé ; et
un contrôleur de système (370) qui contrôle l'analyseur de canal d'information rapide de couche de base (330), le démodulateur (310), et le démultiplexeur d'ensemble (320) pour fournir le service de diffusion multimédia numérique terrestre, reçoit le flux de couche de base désembrouillé et le flux de couche d'amélioration désembrouillé, et les transmet.

7. Système de réception AT-DMB (300) selon la revendication 6, comprenant en outre un analyseur de canal d'information rapide de couche d'amélioration qui analyse un canal d'information rapide de la couche d'amélioration pour extraire les informations liées à l'accès conditionnel, trouve le sous-canal spécifique ayant les données d'accès conditionnel dans la couche d'amélioration sur la base des informations liées à l'accès conditionnel extraites, et trouve les flux de couche de base embrouillés et les flux de couche d'amélioration embrouillés.

8. Procédé de réception AT-DMB comprenant :
la démodulation hiérarchique d'un signal de diffusion multimédia numérique terrestre reçu en provenance d'un système de transmission fournissant un service de diffusion d'accès conditionnel et sa sortie comme un signal de service de couche de base et un signal de service de couche d'amélioration ;
la réception du signal de service de couche de base et du signal de service de couche d'amélioration et leur démultiplexage pour sortir un canal d'information rapide de la couche de base ;
l'analyse du canal d'information rapide de la couche de base pour extraire des informations liées à l'accès conditionnel, le fait de trouver un sous-canal spécifique ayant les données d'accès conditionnel dans la couche d'amélioration sur la base des informations liées à l'accès conditionnel extraites, et le fait de trouver un flux de couche de base embrouillé et un flux de couche d'amélioration embrouillé ;
la réception des données d'accès conditionnel, le décodage des données d'accès conditionnel pour trouver une valeur de clé liée au désembrouillage, et l'exécution d'une commande pour désembrouiller le flux de couche de base embrouillé et le flux de couche d'amélioration embrouillé en utilisant la valeur de clé ;
la réception de la valeur de clé liée au désembrouillage et le désembrouillage du flux de couche de base embrouillé en utilisant la valeur de clé ;
la réception de la valeur de clé liée au désembrouillage et le désembrouillage du flux de couche d'amélioration embrouillé en utilisant la valeur de clé ;
le contrôle de l'analyse, de la démodulation, et du démultiplexage, la fourniture du service de diffusion multimédia numérique terrestre, la réception du flux de couche de base désembrouillé et du flux de couche d'amélioration désembrouillé, et leur transmission.
